# EUROPEAN PATENT APPLICATION

(11) **EP 0 605 189 A1**
(43) Date of publication of application: **06.07.1994**
(21) Application number: 93310425.9
(22) Date of filing: 22.12.1993
(51) Int. Cl.: B29D 30/32

(54) **Method and apparatus for forming a band**

(30) Priority: 28.12.1992 JP 358735/92
(71) Applicant: BRIDGESTONE CORPORATION, Tokyo 104 (JP)
(72) Inventor: Ozawa, Chiaki, Higashimurayama-shi Tokyo (JP); Hosono, Motoaki, Kodaira-shi, Tokyo (JP)
(74) Representative: Silverman, Warren

(57) **Abstract**

The invention provides a method and apparatus for placing a bead 2 on an annular band 1 and folding an edge portion la of the band 1 over the bead 2. The method comprises (a) positioning the band 1 on a forming drum 11, so that at least one of the edge portions 1a of the band 1 projects axially therefrom, (b) radially expanding the forming drum 11, (c) positioning the bead 2 around the outer surface of the edge portion la while reducing the diameter of the edge portion 1a and (d) folding the edge portion 1a over the bead 2. The forming drum 11 is radially expanded to an intermediate diameter in step (b) and is then further radially expanded after the bead 2 is positioned on the outer side of the edge portion 1a. This enables the bead 2 to be positioned accurately on the band 2 without any distortion of the band 1.

## Description

The present invention relates to a method and apparatus for forming a band. In particular, it relates to a method and apparatus for folding both edge portions of a ring-like band and assembling beads on both the edge portions of the band as part of a tyre-manufacturing process.

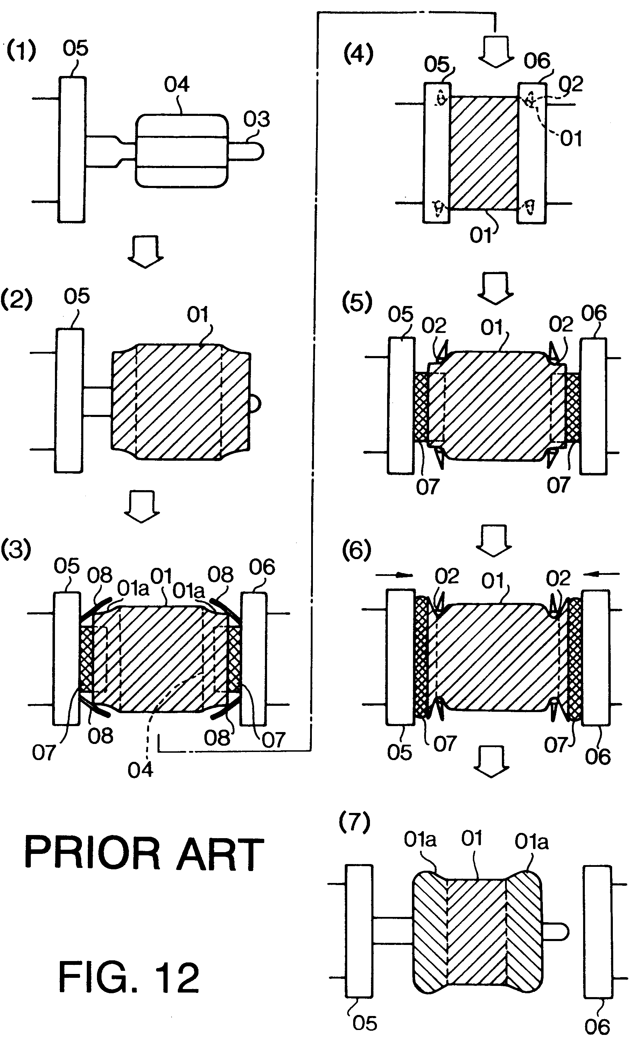

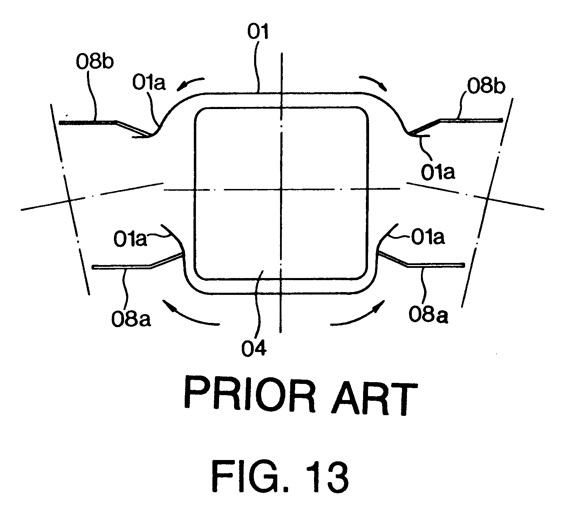

Fig. 12 of the accompanying drawings shows schematically the steps involved in a method of forming a band known in the prior art and Fig. 13 shows schematically problems that may arise in this method.

In this known method, a band 01 is fitted around a radially expandable forming drum 04, which is supported by a supporting shaft 03 projecting from a bead ring holder 05 (see Fig. 12(1)). The forming drum 04 is expanded up to a specified maximum diameter (see Fig. 12(2)) to support and expand the band 01.

The bead ring holder 05 and a similar bead ring holder 06 are positioned coaxially and symmetrically either side of the band 01, and bladders 07 and a plurality of fingers 08 are projected from these bead ring holders 05 and 06 (see Fig. 12(3)).

The bladders 07 are inserted within edge portions 01a of the band 01 which extend from the forming drum 04. The fingers 08, which are located circumferentially and are able to be moved between radially expanded and contracted states, are first disposed along the outer sides of the edge portions 01a in the expanded states, and are subsequently contracted. Consequently, the edge portions 01a are disposed over the shoulder portions of the forming drum 04 and are further reduced in diameter by the contraction of the fingers 08.

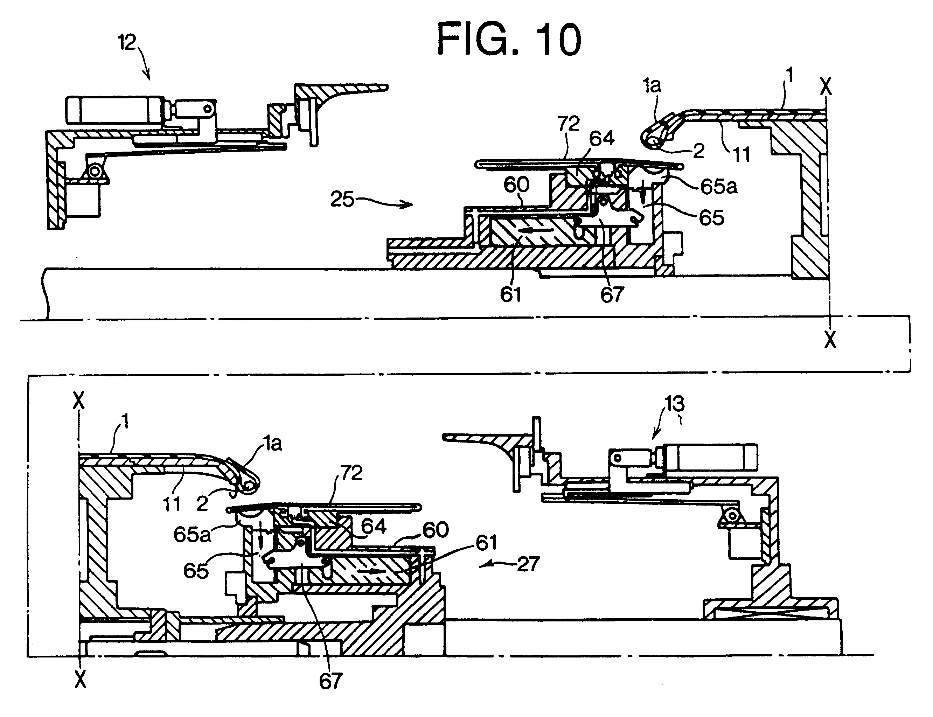

Next, the bead ring holders 05 and 06 advance so as to surround the edge portions 01a (which are reduced in diameter) and beads 02, held by the bead ring holders 05 and 06, are mounted around the edge portions 01a (see Fig. 10(4)).

The bead ring holders 05 and 06 are then separated from the band 01 (see Fig. 12(5)). The bladders 07 are inflated while the bead ring holders 05 and 06 are again brought close to the band 01 (see Fig. 12(6)). This causes the edge portions 01a to be folded over the bead 02 and thus the band 01 is formed such that the beads 02 are wrapped by the folded edge portions 01a, as shown in Fig. 12(7).

However, the above-described band-forming method, has the following disadvantage:

When the plurality of fingers 08 engage the edge portion 01a of the band, the centre axis of the fingers 08 may deviate from that of the forming drum (i.e. it may be off centre). When a plurality of fingers 08 are off-centre, certain fingers contact the edge portion 01a earlier than others.

Accordingly, when the fingers 08 are contracted, as shown in Fig. 13, the fingers 08a that have contacted earlier squeeze the edge portions 01a more than those fingers 08b which contact later. As a result, the amount by which the band is squeezed in the circumferential direction is not constant.

Furthermore, since the fingers 08a which contact the edge portions 01a earlier receive a larger reaction force from the band, they are more susceptible to deformations and fatigue. In addition, the areas of the edge portions 01a squeezed by the earlier-contacting fingers 08a tend to wrinkle.

In the step of the process shown in Fig. 12(4), in which the beads are mounted around the edge portions 01a, the beads 02 released from the bead ring holders 05 and 06 are not supported on their inner peripheral surface side. Accordingly, the beads 02 tend to be easily moved and it is difficult stably to locate them at the specified positions. Consequently, the length of ply between the right and left beads 02 and 02 may not be constant.

The above-described disadvantages cause a variation in the quality of the bands, which deteriorates the uniformity of a tyre.

According to a first aspect of the present invention, there is provided a method of placing a bead on an annular band and folding an edge portion of the band over the bead, comprising:
(a) positioning said band on a forming drum, so that at least one of the edge portions of the band projects axially therefrom;
(b) radially expanding the forming drum;
(c) positioning said bead around the outer surface of the edge portion while reducing the diameter of the edge portion; and
(d) folding the edge portion over the bead,

**characterised in that** said forming drum is radially expanded to an intermediate diameter in step (b) and is then further radially expanded after the bead is positioned on the outer side of the edge portion.

According to a second aspect of the present invention, there is provided apparatus for placing a bead on an annular band and folding an edge portion of the band over the bead, comprising:
(a) a drum radially expandable from a first diameter to a second diameter;
(b) means for positioning said bead around the outer surface of the edge portion;
(c) means for reducing the diameter of the edge portion, and
(d) means for folding the edge portion over the bead,

**characterised in that** said forming drum is radially expandable to a diameter intermediate said first and second diameters.

In the present invention, the diameter of the band edge portion is reduced by the fingers when the drum is expanded to the intermediate diameter. This makes it possible to reduce the amount by which the diameter needs to be reduced. This eliminates the generation of wrinkles and enables the band to be formed uniformly.

Moreover, the beads are positioned around the edge portions when the drum and hence the band, is expanded to the intermediate diameter. Therefore, there is no significant difference between the diameter of the band and that of the beads.

The bead may be supported from the inner side of the edge portion after it is positioned around the outer side thereof. In accordance with one embodiment, the beads are supported by bead lock segments from the inner peripheral surface side. Accordingly, it is possible stably to locate the beads at specified positions, and to equalize the band length between the beads on both the sides over the whole circumference.

As a result of the above, it is possible to obtain a band which is excellent in uniformity, and which can be used to make a tyre with improved uniformity.

For a better understanding of the invention, and to show how the same may be carried into effect, reference will now be made, by way of example only, to the accompanying drawings, in which:-
Fig. 1 is a schematic side view of a band-forming machine in accordance with one embodiment of the second aspect of the present invention;
Figs. 2 to 11 are partial side sectional views of the band forming machine of Fig. 1, showing steps in the method of forming a band in accordance with the first aspect of the present invention;
Fig. 12 is an explanatory view showing the operational procedure of a band-forming machine of the prior art; and
Fig. 13 is a schematic view for showing the off-centre of fingers in the prior art procedure.

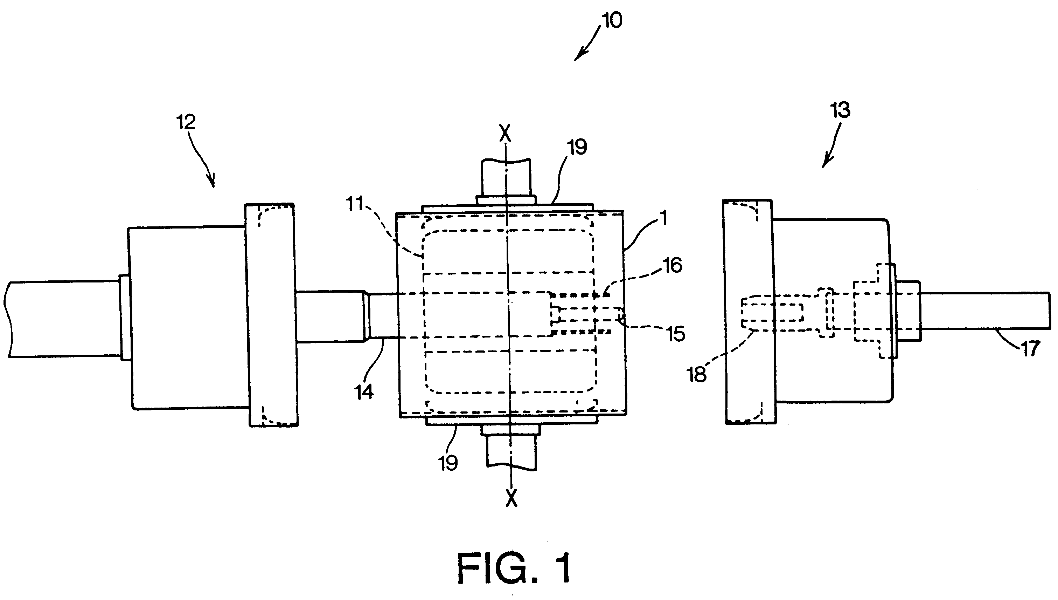

One embodiment in accordance with the apparatus of the present invention will now be described with reference to Figs. 1 to 11.

Fig. 1 is a side view of a band-forming machine. The band-forming machine 10 includes a forming drum 11 with bead setters 12 and 13 (hereinafter referred to as left and right bead setters, respectively) disposed either side thereof. The forming drum 11 is supported by a shaft 14 which passes slidably through the left bead setter 12.

The bead setters 12 and 13 are movable along rails (not shown) which extend parallel to the axis of the forming drum 11 and coaxial to the supporting shaft 14. The bead setters 12 and 13 are movable towards one another so that the forming drum 11 is located therebetween. The right bead setter 13 is supported on a supporting shaft 17 which is arranged to be fitted into the leading end of the supporting shaft 14.

The forming drum 11 is divided in a plurality of parts so that its diameter can be expanded and contracted. In Fig. 1, the forming drum 11 is shown in the contracted state, and a band 1 carried by a band-carrying ring 19 is positioned around the outer periphery of the forming drum 11.

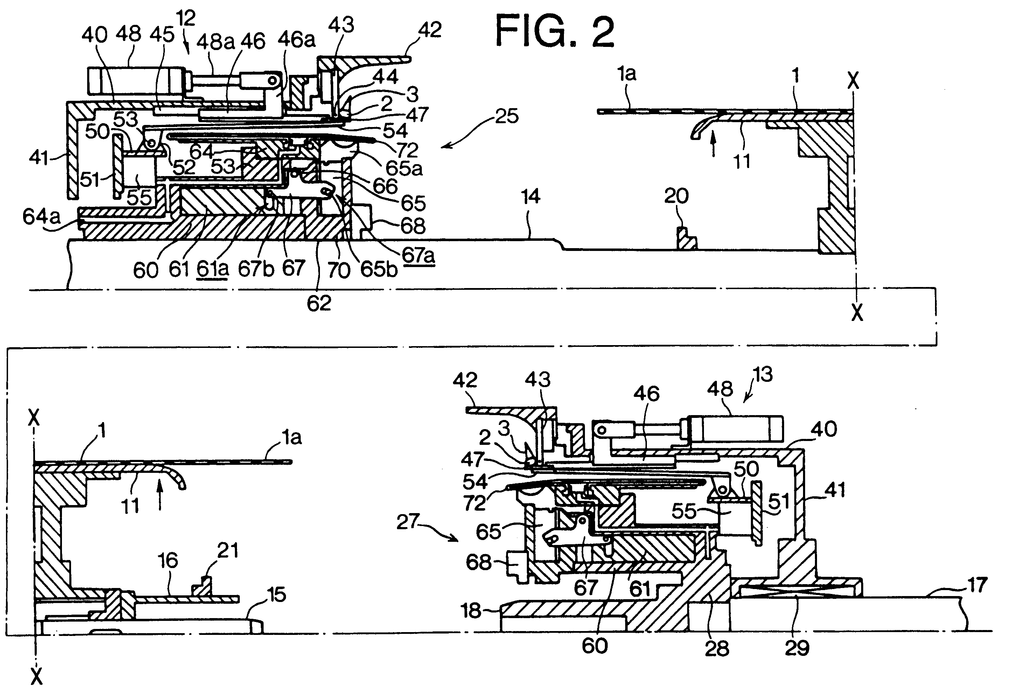

Figs. 2 to 11 show in more detail the internal structures of the right and left bead setters 12 and 13 and their actions in the process of forming a band.

In Fig. 2, the forming drum 11 is shown expanded to an intermediate diameter so as to support the band 1 from the inner side, and the band-carrying ring 19 is removed. The central portion of band 1 is supported by the forming drum 11, and both edge portions 1a of the band 1 project sidewards from the forming drum 11.

A fitting portion is formed at the end of the supporting shaft 14 which passes through the forming drum 11 (see Fig. 1). The fitting portion comprises a small diameter end shaft 15 and a cylinder portion 16 which surrounds the end shaft 15 so as to form an annular space therebetween.

An end shaft 18 is formed at the end of the supporting shaft 17 opposed to the above fitting portion. The end shaft 18 is formed with a cylindrical bore whose diameter is substantially equal to the outside diameter of end shaft 15. The outside diameter of end shaft 18 is substantially equal to the inside diameter of the cylinder portion 16. Thus, by axial movement of the supporting shaft 17, the cylindrical end shaft 18 can be fitted in the fitting portion of the supporting shaft 14, causing the supporting shafts 14 and 17 to be coaxially connected to each other.

The bead setters 12 and 13 are movable symmetrically with respect to the centre line X-X of the forming drum 11. Bead lock positioning stoppers 20 and 21 (Fig. 2) are fitted symmetrically either side of the centre line X-X on the supporting shaft 14 and the cylinder portion 16, respectively.

The left bead setter 12 has a substantially cylindrical shape and a bead lock apparatus 25 is located on the inner side thereof. The bead lock apparatus 25 is slidably supported by the supporting shaft 14 so as to be freely movable towards and away from the drum 11. Similarly, the right bead setter 13 has a substantially cylindrical shape, and a bead lock apparatus 27 is located on the inner side thereof. The bead lock apparatus 27 is integrally supported by the supporting shaft 17 by means of a connecting member 28, and is movable together with the supporting shaft 17 towards and away from the drum 11. The supporting shaft 17 is slidably supported by the bead setter 13 via a sliding member 29.

The bead setters 12, 13, and the bead lock apparatuses 25, 27 are symmetrically disposed and have similar respective structures. Accordingly, in the following description, the similar parts in the right and left bead setters and bead lock apparatuses are indicated by the same reference numerals. Also, movement of the right and left bead setters 12, 13 and the bead lock apparatus 25,27 towards and away from the forming drum 11 will be referred to as advanced and retreated, respectively.

The bead setters 12, 13 comprise cylinder portions 40 with end plates 41 which have openings at their centres. The bead lock apparatuses 25, 27 are fitted within the cylinder portions 40 and are able to move freely in and out thereof.

A pusher can 42, which has a diameter larger than that of the cylinder portion 40, is provided to project from the edge of each cylinder portion 40 opposed to the end plate 41. The outer peripheral surface of the pusher can 42 is formed as a cylindrical surface, and the inner peripheral surface thereof is formed as a curved surface, so that the inner diameter gradually increases as it nears the leading edge.

Six bead holders 43 are circumferentially disposed on the inner peripheral surface of the pusher can 42 so as to be continuous with each other. As shown in Fig. 2, these bead holders 43 are located with their longitudinal axis transverse to the supporting shaft 14 and are pivotably supported at their radially outer ends.

Pivoting of the bead holders 43 enables them to be moved towards and away from the shafts 14, 17 so that the inside diameter can be increased or decreased. A magnet 44 is embedded in the side of the inner end of each bead holder 43 for attracting steel wires of a bead, and enabling the bead holders 43 to attract and hold the bead.

A plurality of rails 45 are provided on the inner peripheral surface of each cylinder portion 40 parallel to the supporting shaft 14, and a cylinder member 46 is slidably supported on these rails 45. A bead locator ring 47 is provided to project from the leading edge of the cylinder member 46.

A projection 46a extends outwardly of the cylinder member 46 through an elongate aperture in the cylinder portion 40 and engages with the leading end of a piston rod 48a of a cylinder 48 fixed on the outer peripheral surface of the cylinder portion 40.

Accordingly, the cylinder member is driven by the cylinder 48 via the projection 46a and is slidably movable in the axial direction. This enables the bead locator ring 47 to be moved so as to be located forwardly or rearwardly of the bead holders 43.

In Fig. 2, the bead holders 43 are shown contracted in diameter and the bead locator ring 47 projects forwardly of the bead holders 43. An annular bead 2 with a stiffener 3 fixed thereto is fitted and held in an angular portion formed by the bead holders 43 and the bead locator ring 47.

A finger-moving member, comprising a finger-supporting cylinder 50 and an end plate 51, is supported on the inner side of the cylinder portion 40 of each of the bead setters 12 and 13 so as to be axially slidable. Bearings 52 project at equal intervals from the outer peripheral surface of the finger-supporting cylinder 50. There may be, for example, eight such bearings 52. Fingers 54, which are pivotably supported at their base end portions by the bearings 52 via pins 53, extend towards the side of the forming drum 11 along the cylinder member 46.

The fingers 54 are biased by coil springs (not shown) so as to expand outwardly. However, in Fig. 2, the fingers 54 are shown in the contracted state because expansion thereof is restricted by the leading edges of the fingers 54 abutting on the inner peripheral surface of the bead locator ring 47. The end plate 51 is opposed to the end plate 41 of each of the bead setters 12 and 13, and the fingers 54 are capable of being retreated relative to each of the bead setters 12 and 13 until the end plate 51 contacts with the end plate 41. Further, a stopper 55 is provided on the inner side of the finger-supporting cylinder 50. This limits movement of the fingers 54 relative to each of the bead lock apparatuses 25, 27 by abutting on each of the bead lock apparatuses 25, 27.

The main body portion of each of the bead lock apparatuses 25, 27 is formed by an annular air cylinder 60 with an annular piston 61 and a bead lock segment-supporting portion 62 is integrally provided in front of the cylinder 60. A bladder-supporting portion 64 is formed on a flange 63 of the air cylinder 60.

The bead lock segment-supporting portion 62 has an annular shape, and a plurality of divided bead lock segments 65 are inserted in annular grooves opening on the outer peripheral surface of the bead lock segment supporting portion 62 so as to be radially slidable. The outer end portion of each bead lock segment 65 functions as a bead-supporting portion 65a exposed from the groove. A recessed surface is formed on the outer peripheral surface of each bead-supporting portion 65a, so that the bead 2 can be supported from the inner peripheral side by each recessed surface. The shape of the recessed surface is specified according to the sectional shape of the bead used. Each bead-supporting portion 65a is exchangeable with other bead-supporting portions having different shapes.

A link member 67 is pivotably supported on the bead lock segment-supporting portion 62 via a pin 66. A groove 67a is formed at one end of the link member 67, and a pin 65b, projecting from each bead lock segment 65, is engaged with the groove 67a. A pin 67b is provided on the other end of the link member 67 and is slidably engaged in a radial groove 61a formed on the annular piston 61 of the air cylinder 60.

In Fig. 2, the piston 61 is perfectly inserted within the air cylinder 60, and the bead lock segments 65 are also inserted within the bead lock segment-supporting portion 62. In such a state, the piston 61 can be projected by supplying air to the cylinder bore of the air cylinder 60. This causes the link member 67, which is engaged with the piston 61 via the groove 61a and the pin 67b, to be pivoted around the pin 66. This in turn causes the bead lock segments 65, which are engaged with the groove 67a provided at one end of the link member 67 via the pin 65a, to be projected radially outwardly, so that the diameter of the bead-supporting portion 65a is expanded.

A bead lock stopper 68 is located on the front end surface of the bead lock segment-supporting portion 62 and is arranged to be slidable in the radial direction. When it is located at the radially most inward position, the bead lock stopper 68 is opposed to each of the above bead lock-positioning stoppers 20 and 21. Hence, when each of the bead lock apparatuses 25, 27 advances, the bead lock stopper 68 abuts on each of the bead lock-positioning stoppers 20 and 21, and thereby prevents further axial movement of the bead lock apparatuses 25, 27. When it is located in the radially most outward position, the bead lock stopper 68 does not abut on each of the bead lock-positioning stoppers 20 and 21. In this case, a sliding stopper 70, which is formed on the inner peripheral surface of the bead lock segment-supporting portion 62 so as to be spaced apart from the bead lock stopper 68 by a specified interval in the axial direction, abuts the bead lock-positioning stoppers 20 and 21. Therefore, each of the bead lock apparatuses 25, 27 is able to advance further than when the bead lock stopper 68 prevents further axial movement. Thereafter, each of the bead lock apparatuses can be fixed in position by inward radial movement of the bead lock stopper 68 so that the bead lock-positioning stoppers 20 and 21 are located between the bead lock stopper 68 and the sliding stopper 70 and it is impossible to move the bead lock apparatuses in the axial direction.

A folding bladder 72 is supported on the bladder-supporting portion 64. When air is supplied to the folding bladder 72 through an air passage 64a, the bladder inflates and swells. On the other hand, when air in the bladder 72 is discharged through the air passage 64a, the bladder deflates and shrinks. Fig. 2 shows the deflated, shrunken state of the folding bladder 72. In this state, the bladder 72 lays on the outer peripheral surface of the bladder-supporting portion 64, and the front portion of the bladder 72 extends to the outer peripheral surface of the bead-supporting portions 65a of the bead lock segments 65.

Hereinafter, the operational procedure of the band forming machine 10 in accordance with one embodiment of the present invention will be described with reference to Figs. 2 to 15.

Fig. 2 shows the stand-by condition. The bead setters 12, 13, and the bead lock apparatuses 25, 27 are located apart from the forming drum 11. The forming drum 11 is expanded to the intermediate diameter to support the band 1, and the bead holders 43 and the bead locator rings 47 of the bead setters 12, 13 support the bead 2.

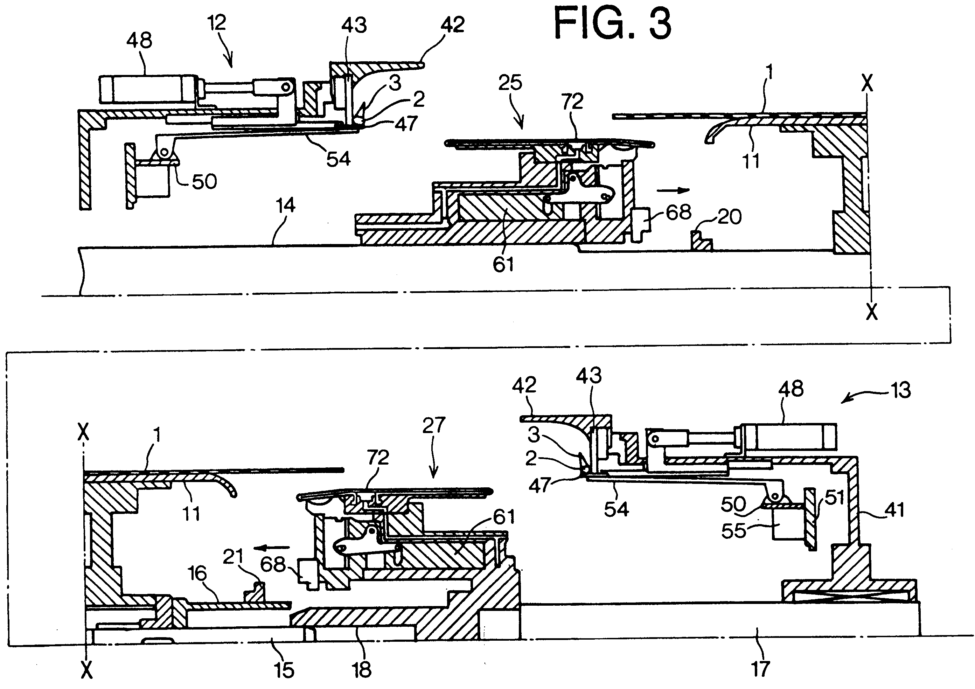

The bead lock apparatus 25 and the bead lock apparatus 27 advance along the supporting shaft 14 and the supporting shaft 17, respectively. Movement of the bead lock apparatuses 25 and 27 is stopped at the position where the cylindrical leading end shaft 18 is partially inserted in the leading end shaft 15 of the supporting shaft 14 (see Fig. 3).

Next, while the bead setters 12 and 13 are maintained in position, the finger-supporting cylinder 50 advances by a specified distance. Thus, the portion of the fingers 54 which abuts the locator ring 47 gradually moves towards the base end of the fingers 54, so that the fingers 54 are able to expand outwardly by means of the springs (not shown).

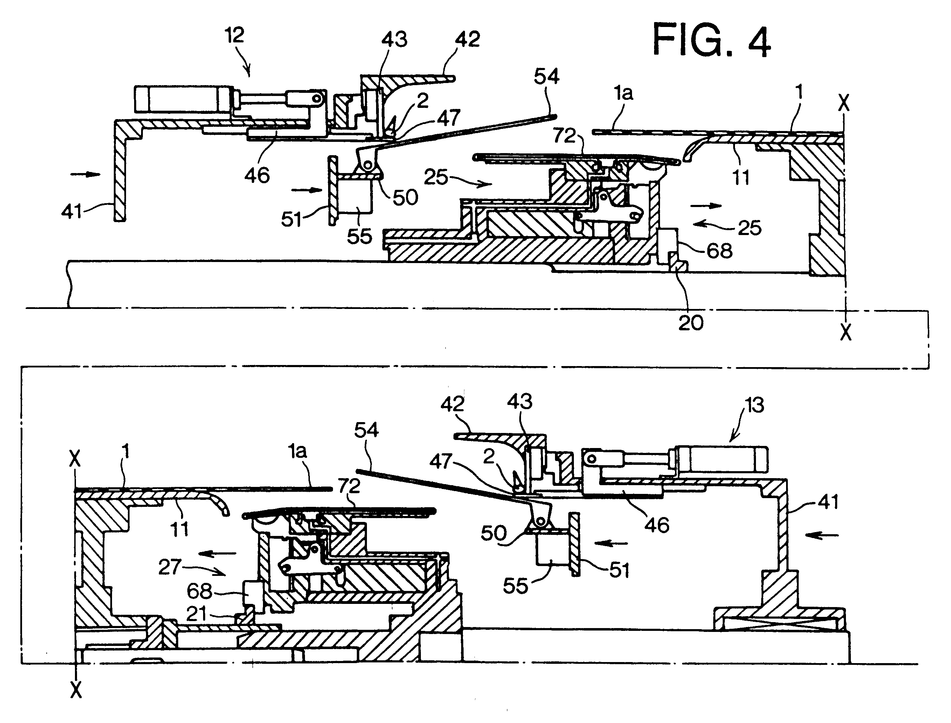

The relative position of the bead lock apparatuses 25, 27, the bead setters 12, 13, and the fingers 54 are maintained and they further advance as a whole so as to be located at positions in which the bead lock stopper 68 abuts each of the bead lock positioning stoppers 20 and 21 (see Fig. 4).

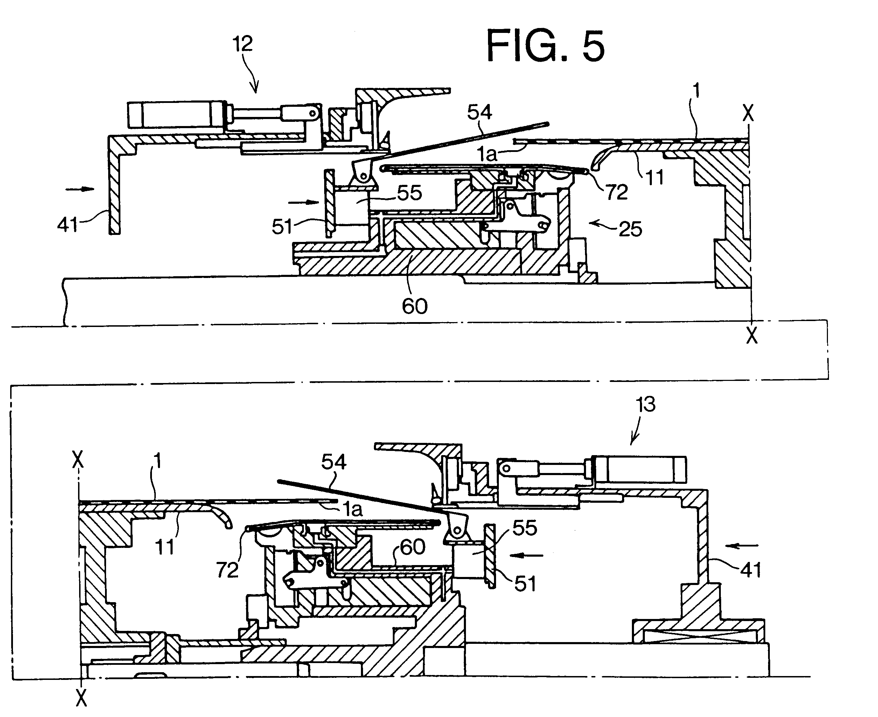

Next, the bead setters 12 and 13 advance together with the fingers 54 until the stopper 55 abuts on the air cylinders 60 of each of the bead lock apparatuses 25, 27 (see Fig. 5). In such a state, the fingers 54 extend over the outside of the edge portion 1a of the band 1 which is supported by the forming drum 11.

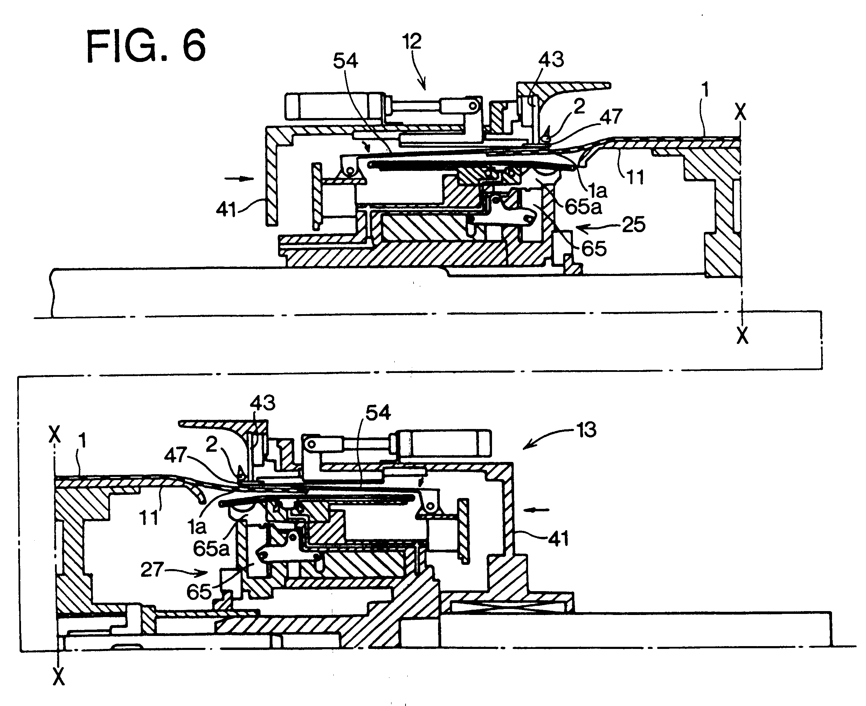

The bead setters 12, 13 then advance so that the bead locator ring 47 advances while pushing the outer surfaces of the fingers 54 downwards, so that the fingers 54 are gradually caused to contract and squeeze the edge portion 1a of the band 1 (see Fig. 6). However, since the forming drum 11 supporting the band 1 is only expanded to the intermediate diameter, the amount by which the fingers 54 can squeeze the edge portion 1a is small, thereby reducing the chances of wrinkling in the edge portion 1a occurring.

Movement of the bead setters 12, 13 is stopped when the bead 2, supported by the bead holders 43 and the bead locator rings 47, reaches the position corresponding to the bead-supporting portions 65a of the bead lock segments 65 (see Fig. 6).

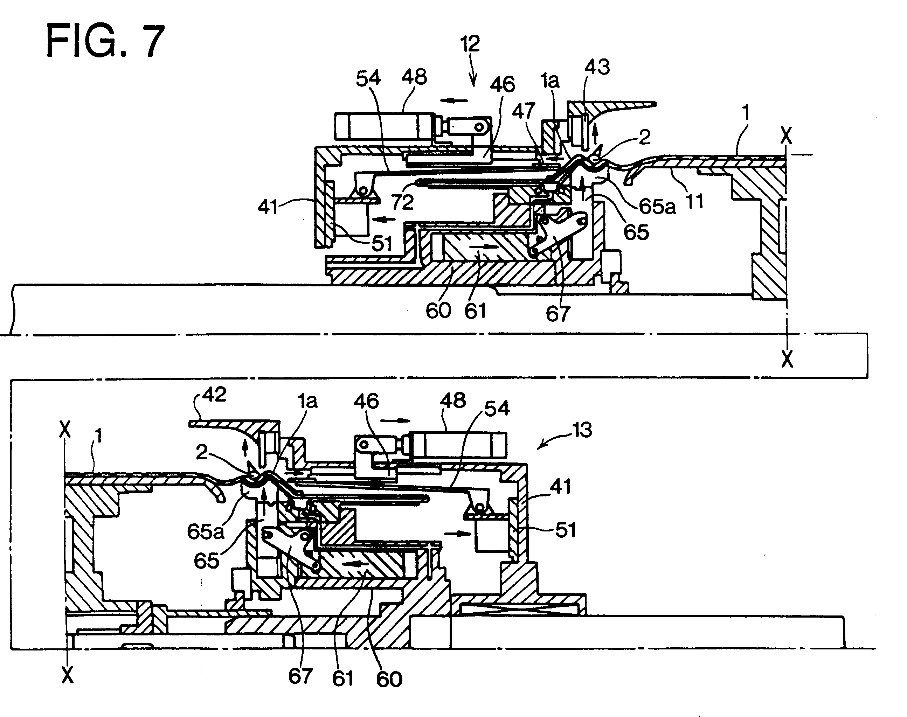

Next, by projecting the piston 61 from the air cylinder 60, the bead lock segments 65 are moved radially outwardly by the link member 67, so that the bead-supporting portions 65a approach the bead 2 with a part of the folding bladder 72 therebetween. The fingers 54 and the bead locator ring 47 are then retreated with a suitable timing and, at substantially the same time, the bead holders 43 are all pivoted to be expanded in diameter as described above. Support of the bead 2 by the bead locator ring 47 and the bead holders 43 is released, and the bead 2 is supported from the inner peripheral side by the recessed portions formed on the outer peripheries of the bead-supporting portions 65a through parts of the edge portion 1a of the band 1 and the folding bladder 72 (see Fig. 7). Thus, bead 2 is transferred from being supported by the bead locator ring 47 and the bead holders 43 to being supported by the bead supporting portion 65a. The bead 2 moves little in this transfer and therefore it can be accurately located at a specified position on the edge portion 1a. The bead 2 causes the folding bladder 72 and the edge portion 1a to be held against the bead-supporting portion 65a of the expanded bead lock segments 65 in such a manner that they follow the contour of the recessed portions of the bead-supporting portions 65a.

In this state, the bead lock stoppers 68 are withdrawn radially outwardly, so that they can no longer abut the bead lock positioning stoppers 20, 21. Then, the forming drum 11 is expanded up to its maximum diameter and the bead lock apparatuses 25, 27 are advanced until the sliding stopper 70 abuts each of the bead lock positioning stoppers 20, 21. The bead lock stopper 70 and the bead lock stopper 68 and each of the bead lock apparatuses 25, 27 is fixed in this specified position.

When the forming drum 11 is expanded to its maximum diameter, the edge portions 1a of the band 1 are drawn towards the centre line X-X. However, at the same time, the bead lock apparatuses 25, 27 are moved towards the centre line X-X, as described above. The beads 2 are therefore moved together with the edge portions 1a, which prevents the beads 2 moving relative to the band 1 so that the length of the band 1 between both of the beads 2 is kept constant.

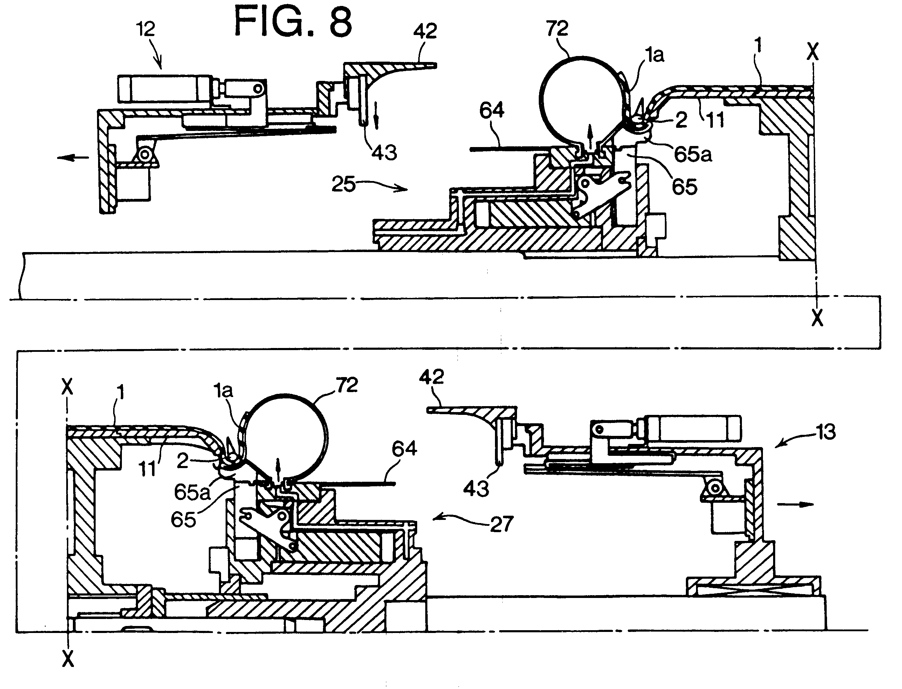

Next, the bead setters 12, 13 are retreated together with the fingers 54, and the bead holders 43 are contracted. Then, air is supplied to the folding bladder 72 which causes it to swell outwards, (see Fig. 8). The part of the edge portion 1a which is located outside the portion held by the bead 2 is expanded radially outwardly with the swelled bladder.

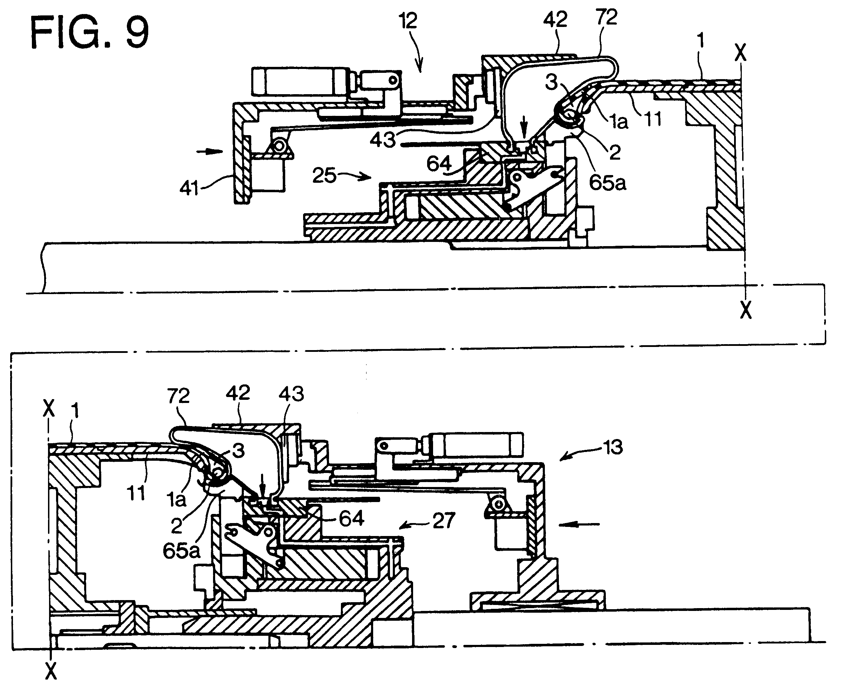

When the folding bladder 72 is fully swelled, the bead setters 12, 13 advance and the pusher can 42 at the leading edge and the bead holders 43 press the swelled folding bladder 72, so that the bladder 72 is deformed and discharges air. The bladder 72 is prevented from swelling in the radially outward direction by the pusher can 42, and therefore it is deformed along the outer peripheral surface of the band 1. Thus, the edge portion 1a is folded over the outer surface of the band 1 with the bead 2 and the stiffener 3 wrapped on the inner side (see Fig. 9).

Next, the bead setters 12, 13 are retreated again, and the air in the folding bladder 72 is completely discharged, so that the bladder 72 lies on the bladder-supporting portion 64. Thus, when the piston 61 of the air cylinder 60 is activated, the bead lock segments 65 are moved radially inwardly by the link member 67, and the bead-supporting portion 65a is contracted and the bladder 72 is separated from the edge portion 1a. The band 1 remains in the state in which the bead 2 is wrapped by the folded edge portion 1a (see Fig. 10).

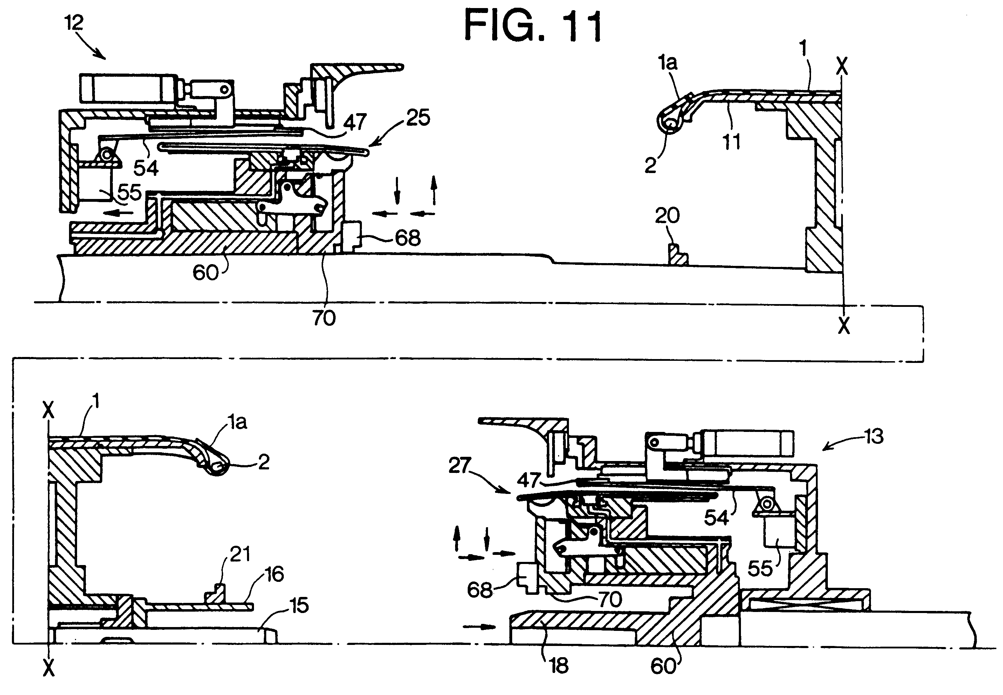

Next, the bead lock stopper 68 is once more moved radially outwardly to release the fixed position of the bead lock apparatuses 25 and 27 by the bead lock positioning stoppers 20, 21 and the bead lock apparatuses 25 and 27 are retreated. After that, the bead lock stopper 68 is returned to its original position, and subsequently the bead lock apparatuses 25, 27 are retreated to be returned to the original stand-by positions (see Fig. 11).

Then, the bead locator ring 47 advances, and the fingers 54 advance until the stopper 55 abuts the air cylinder 60, so that the apparatus, except for the forming drum 11, is returned to the initial stand-by state.

After that, the forming drum 11 is contracted to the minimum diameter to enable the band 1 to be removed, and a new band is supported on the forming drum 11. Then, new beads are mounted on the angular portion formed by the bead holders 43 and the bead locator ring 47, and thus another band forming operation can be performed in the same procedure as described above.

In the above-described embodiment, the fingers 54 are positioned at the specified positions by allowing the stoppers 55 to abut the bead lock apparatuses 25 and 27 which are positioned by the bead lock positioning stoppers 20 and 21, so that the edge portions 1a of the band 1 are uniformly squeezed over the whole circumference.

Furthermore, when the bead 2 is assembled on the edge portion 1a, the bead supporting portion 65a is expanded and supports the bead 2. This means that movement of the bead 2 relative to the band 1 is small, and the bead 2 can be accurately positioned at the specified position of the edge portion 1a.

In addition, when the forming drum 11 is expanded to the maximum diameter, the bead lock apparatuses 25 and 27 are brought closer to the forming drum side, so that movement of the beads 2 is prevented.

When the folding bladder 72 is swelled, the bead lock apparatuses 25 and 27 are fixed at the specified position by holding each of the bead lock positioning stoppers 20 and 21 between the sliding stopper 70 and the bead lock stopper 68. Furthermore, the expanded bead-supporting portions 65a support the bead 2 with a part of the edge portion 1a and the folding bladder 72 located between the bead-supporting portions 65a and the bead 2. Accordingly, folding of the edge portion 1a and the folding bladder 72 can be securely performed.

By the assembling the beads at the specified positions, and by accurately folding the bead edge portions, it is possible to form the band with high quality and hence to improve the uniformity of the tyre.

## Claims

1. A method of placing a bead (2) on an annular band (1) and folding an edge portion (1a) of the band (1) over the bead (2), comprising:
(a) positioning said band (1) on a forming drum (11), so that at least one of the edge portions (1a) of the band (1) projects axially therefrom;
(b) radially expanding the forming drum (11);
(c) positioning said bead (2) around the outer surface of the edge portion (1a) while reducing the diameter of the edge portion (1a); and
(d) folding the edge portion (1a) over the bead (2),
**characterised in that** said forming drum (11) is radially expanded to an intermediate diameter in step (b) and is then further radially expanded after the bead (2) is positioned on the outer side of the edge portion (1a).

2. A method as claimed in claim 1, wherein said bead (2) is supported from the inner side of the edge portion (1a) after it is positioned around the outer side thereof.

3. A method as claimed in claim 2, wherein said bead (2) is supported by bead-supporting means (65a) which is positioned adjacent the inner side of the edge portion (1a) and is radially expanded to support said bead (2).

4. A method as claimed in claim 1, 2 or 3, wherein the diameter of said edge portion (1a) is reduced by a plurality of fingers (54) arranged to be positioned adjacent said edge portion (1a) and to be moved radially inwards against said edge portion (1a).

5. A method as claimed in claim 1, 2, 3 or 4, wherein said edge portion (1a) is folded over said bead (2) by inflating a bladder (72) arranged to be located adjacent the inner side of at least a part of said edge portion (1a).

6. Apparatus (10) for placing a bead (2) on an annular band (1) and folding an edge portion (1a) of the band (1) over the bead (2), comprising:
(a) a drum (11) radially expandable from a first diameter to a second diameter;
(b) means for positioning said bead (2) around the outer surface of the edge portion (1a);
(c) means for reducing the diameter of the edge portion (1a); and
(d) means for folding the edge portion (1a) over the bead (2),
**characterised in that** said forming drum (11) is radially expandable to a diameter intermediate said first and second diameters.

7. Apparatus (10) as claimed in claim 6, further comprising means for supporting the bead (2) from the inner side of the edge portion (1a).

8. Apparatus (10) as claimed in claim 7, wherein said bead-supporting means is radially expandable to support said bead (2).

9. Apparatus (10) as claimed in claim 7 or claim 8, wherein said bead-supporting means comprises a plurality of radially-located bead-engaging segments (65a).

10. Apparatus (10) as claimed in claim 6, 7, 8, or 9, wherein said means for reducing the diameter of said edge portion (1a) comprises a plurality of fingers (54) locatable around the outer surface of the band (1) and arranged to be moved radially inwardly against said edge portion (1a).

11. Apparatus (10) as claimed in any preceding claim wherein said means for folding the edge portion (1a) comprises an inflatable bladder (72) locatable adjacent the inner side of at least a part of said edge portion (1a).

12. A method of forming a ring-like band (1) having folded portions wherein beads (2) are wrapped at both edges (1a), comprising:
contracting in diameter a forming drum (11) capable of being changed in diameter, and disposing a ring-like band (1) around said forming drum (11);
expanding said forming drum (11) to an intermediate diameter so that said band (1) is supported around said forming drum (11) with both edge portions (1a) of said band (1) projecting from said forming drum (11);
positioning bead lock segments (65) capable of being changed in diameter at specified axial positions in the inner sides of said edge portions (1a);
positioning fingers (54), which are disposed in a cylindrical shape and can be expanded and contracted, at positions outside said edge portions (1a), in an expanded state;
positioning beads (2) at positions outside said edge portions (1a) corresponding to the positions of said bead lock segments (65);
contracting said fingers (54) to reduce the diameters of said edge portions (1a);
expanding said bead lock segments (65) to support said beads (2) together with said edge portions (1a) from the inner side, thereby assembling said beads (2) on said band (1);
expanding said forming drum (11) to a maximum diameter, thereby moving said bead lock segments (65) towards said forming drum (11) while supporting said beads (2); and
swelling a folding bladder (72) and folding said edge portions (1a) over the outer peripheral surface of said band (1), thereby wrapping said bead (2).

13. Apparatus for forming a ring-like band (1) wherein beads (2) are wrapped around both sides, comprising:
a forming drum (11) divided into a plurality of segments and capable of being expanded and contracted;
bead lock segments (65) divided into a plurality of pieces, which are synchronously expandable and contractable for supporting said beads (2) from the inner peripheral surface side;
folding bladders (72) assembled in a bag-like shape, which are swelled and contracted by supply or discharge of air, for folding edge portions (1a) of said band (1) supported by said forming drum (11);
a bead lock moving mechanism for moving said bead lock segments (65) and said folding bladders (72) integrally close to and apart from said forming drum (11);
a plurality of fingers (54) disposed in a cylindrical shape, which are freely expandable and contractable toward the side of forming drum (11) by pivoting in radial directions;
bead holders (43) divided into a plurality of pieces, which are synchronously expandable and contractable for supporting beads (2) on side surfaces in the contracting state; and
a bead holder moving mechanism for moving said bead holders (42) to predetermined positions with respect to said bead lock segments (65), and contracting said fingers (54).
